# EUROPEAN PATENT APPLICATION

(11) **EP 2 088 498 A2**
(43) Date of publication of application: **12.08.2009**
(21) Application number: 09250288.9
(22) Date of filing: 05.02.2009
(51) Int. Cl.: G06F 3/041

(54) **A touch screen display apparatus, and system and method for same**

(30) Priority: 06.02.2008 GB 0802223
(71) Applicant: The Wandsworth Group Limited, Woking, Surrey GU21 5SE (GB)
(72) Inventor: Mockett, Richard John, Woking, Surrey GU21 5SE (GB)
(74) Representative: Oxley, Robin John George

(57) **Abstract**

A touch screen apparatus 1, having a screen 2 which is adapted to be touched by one or more users to operate a computer system according to command steps which appear on the screen for displaying information thereon. There is sensor means 3 in the form of an array of sensor elements or touch points, which are each indicated by a 'X' in the Figure but which are not normally visible to a user. However, they are able to detect when a wiping element is wiped across an area of the screen 2, which it is desired to clean, usually but not always the whole surface area. The number, position and disposition of the, touch points 'X' is controlled by computer software, which is able to vary the number, location and distribution of the points so that a user is not able to learn the characteristics of a particular array 3. This ensures that a complete wiping action is effected between uses of the screen.

## Description

The invention relates to a touch screen display apparatus, and system and method for same.

Touch screens are increasingly used in computer systems, as they are relatively quick and easy to use. However, they can be the source of infection and cross-infection when a number of users touch the same touch screen of say a PC. This is particularly so in hospitals, where it is essential that the screen is wiped between users with an approved cleanser such as alcohol or other approved fluids.

This is to reduce the risk of cross-infection from C-Difficile, MRSA and other hospital bound infections.

Unfortunately, it is not always the case that the screen is wiped between uses, by different users, so increasing the risk of cross-infection.

It is an object of the invention to seek to mitigate this disadvantage.

According to a first aspect, the invention provides a touch screen display apparatus, comprising a screen and sensor means sensitive to motion in a direction across the screen by wiper means, whereby to determine that a desired area of the screen has been contacted by the wiper means and wiped thereby.

According to a second aspect, the invention provides a system for mitigating cross-infection when using a touch screen display apparatus, comprising a main computer adapted to control a display on the screen, a user identification code for log-on to the system, means to instruct wiping of the screen after log-on, and means to cancel log-on if the screen is not wiped.

According to a third aspect, the invention provides a method for use of a touch sensitive display apparatus, comprising providing a computer system including a touch screen, including the steps of providing for log-on using a user identification code, providing an instruction for wiping the screen, and providing for cancellation of log-on if the screen is not wiped.

Using the invention it is possible to ensure that the screen is wiped between uses, and that users are not able to learn the location of the location and number of the sensor means or wipe detection points.

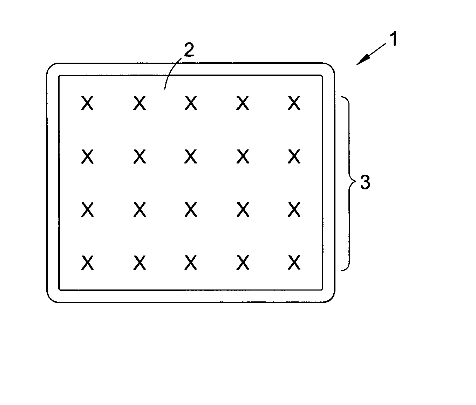

A touch screen display apparatus is schematically illustrated in front elevation in the accompanying drawing.

Referring to the drawing there is shown a touch screen apparatus 1, having a screen 2 which is adapted to be touched by one or more users to operate a computer system according to command steps which appear on the screen for displaying information thereon. There is sensor means 3 in the form of an array of sensor elements or touch points, which are each indicated by a 'X' in the Figure but which are not normally visible to a user. However, they are able to detect when a wiping element is wiped across an area of the screen 2, which it is desired to clean, usually but not always the whole surface area. The number, position and disposition of the touch points 'X' is controlled by computer software, which is able to vary the number, location and distribution of the points so that a user is not able to learn the characteristics of a particular array 3. This ensures that a complete wiping action is effected between uses of the screen.

Thus in use in a hospital, the screen 2 may be used to by staff to access patient medical records held in a data base or other hospital computer systems, or by patients for entertainment and communications. Access thereto is via the touch screen, usually positioned at workstations, on portable wireless devices or at a patient's bed-side.

Each user is required to log-on to the hospital's computer system. This usually comprises, for security, a two-step process, using identification means, usually any two of say user name, password, PIN, smart card, Bluetooth or radio frequency ID tags, or biometric readers such as fingerprint readers.

After the first step, the screen 2 has to be wiped for hygiene purposes, otherwise the user cannot proceed to the next step. Software puts up the instruction to wipe the screen, and then allocates the array 3 on the area of the screen 2 which must be wiped within an allocated or pre-determined time. The act of wiping, usually with alcohol or some other cleaning fluid, is detected by the touch points X. If all are wiped within the predetermined time, the user is able to proceed to the next step of the log-in process. If not all are wiped within the allocated time, the user is prompted to repeat the wiping process. After a plurality, in the embodiment two, of failed complete wipings, the user must repeat the first step of the log-on process. The cleaning fluid is suitably impregnated on a hand-held cloth, for ease of use.

It will be understood that the number and distribution of the touch points 'X' can be changed for each user using the software, there being a number of pre-set patterns or arrays so that each user wipes the whole of the area of the screen 2 to be wiped and so that users are not able to learn the number and distribution of the touch points.

## Claims

1. A touch screen display apparatus, comprising a screen and sensor means sensitive to motion in a direction across the screen by wiper means, whereby to determine that a desired area of the screen has been contacted by the wiper means and wiped thereby.

2. Apparatus according to Claim 1, there being a plurality of sensor means invisible to a user distributed across the screen.

3. Apparatus according to Claim 2, the plurality of sensor means being provided in a pattern or array over the desired area of the screen.

4. Apparatus according to Claim 3, the pattern or array being adapted to be varied.

5. Apparatus according to Claim 4, the sensor means being adapted to be varied in number.

6. Apparatus according to Claim 4, the sensor means being adapted to be varied in distribution.

7. Apparatus according to Claim 4, the sensor means being adapted to be varied in number and distribution.

8. Apparatus according to any of Claims 2 to 7, the sensor means each comprising a point on the screen invisible to a user.

9. Apparatus according to Claim 8, the wiper means being manually applied to the screen.

10. Apparatus according to Claim 9, the wiper means comprising a hand-held cloth impregnated with alcohol or other cleaning fluid.

11. A system for mitigating cross-infection when using a touch screen display apparatus, comprising a main computer adapted to control a display on the screen, a user identification code for log-on to the system, means to instruct wiping of the screen after log-on, and means to cancel log-on if the screen is not wiped.

12. A system according to Claim 11, the means to cancel comprising a time delay after log-on.

13. A method for use of a touch sensitive display apparatus, comprising providing a computer system including a touch screen, including the steps of providing for log-on using a user identification code, providing an instruction for wiping the screen, and providing for cancellation of log-on if the screen is not wiped.

14. A method according to Claim 13, the step of providing an instruction including providing a repeat instruction to wipe the screen if the screen is not wiped within a time delay from log-on.

15. A method according to Claim 14, the step of cancellation of log-on being effected after a plurality of repeat wipe instructions.

16. A method according to Claim 15, the number of repeat wipe instructions being two.
